# EUROPEAN PATENT SPECIFICATION

(11) **EP 4 175 071 B1**
(45) Date of publication and mention of the grant of the patent: **05.03.2025**
(21) Application number: 21833169.2
(22) Date of filing: 23.05.2021
(51) Int. Cl.: H01Q 15/08, B33Y 10/00, B33Y 70/10, B33Y 80/00

(54) **ARTIFICIAL DIELECTRIC LENS FABRICATION METHOD AND ARTIFICIAL DIELECTRIC LENS THEREOF**
VERFAHREN ZUR HERSTELLUNG EINER KÜNSTLICHEN DIELEKTRISCHEN LINSE UND KÜNSTLICHE DIELEKTRISCHE LINSE DARAUS
PROCÉDÉ DE FABRICATION DE LENTILLE DIÉLECTRIQUE ARTIFICIELLE ET LENTILLE DIÉLECTRIQUE ARTIFICIELLE ASSOCIÉE

(30) Priority: 28.06.2020 CN 202010597009
(43) Date of publication of application: 03.05.2023
(73) Proprietor: BEIJING HIGH WAY TELECOMMUNICTION TECHNOLOGY CO., LTD., Beijing 100086 (CN)
(72) Inventor: LV, Chenxi, Beijing 100086 (CN); HUANG, Wei, Beijing 100086 (CN)
(74) Representative: Cabinet Chaillot
(86) International application number: PCT/CN2021/095359
(87) International publication number: WO 2022/001477

(56) References cited:
- EP-A1- 0 786 825
- EP-A1- 1 253 668
- CN-A- 111 262 042
- CN-A- 111 799 566
- JP-A- H09 191 212
- JP-A- S62 258 505
- AUSTIN J GOOD ET AL: "Multifunctional graded dielectrics fabricated using dry powder printing", SMART MATERIALS AND STRUCTURES, IOP PUBLISHING LTD., BRISTOL, GB, vol. 26, no. 9, 14 August 2017 (2017-08-14), pages 95036, XP020319207, ISSN: 0964-1726, [retrieved on 20170814], DOI: 10.1088/1361-665X/AA782B
- ZHANG SHIYU ET AL: "3D-printed flat lens for microwave applications", 2015 LOUGHBOROUGH ANTENNAS & PROPAGATION CONFERENCE (LAPC), IEEE, 2 November 2015 (2015-11-02), pages 1 - 3, XP032844376, DOI: 10.1109/LAPC.2015.7366130

## Description

This application claims the priority of the China patent application filed in China National Intellectual Property Administration on June 28, 2020, with the application number of 202010597009.0 and the invention title of "Fabrication Method of Artificial Dielectric Lens and Its Artificial Dielectric Lens".

### 1. Technical Field

The invention relates to the field of antennas, in particular to the fabrication method of an artificial dielectric lens and the artificial dielectric lens thereof.

### 2. Background Art

The dielectric lens is a component used in the communication antenna. The traditional Luneberg lens antenna is made by two processes: punching and foaming. The punching method is difficult for technicians and the foaming method has a low dielectric constant. Other antennas made of special materials have a higher material density. The patent application 2017112204.2 proposes an artificial dielectric multilayer cylindrical lens with a low density, which is composed of N concentric layers, each of which contains a base material with a low dielectric constant and an additive material with a high dielectric constant and low specific gravity. The base material is the light foaming material which is generally plastic. Adding different types or quantities of additive materials in plastic production will complicate the process. If the additive is spread on the surface of the substrate, it is not easy to control the uniformity, and the particles of additive materials distributed on the surface of the substrate will also cause scattering, which will affect the electromagnetic performance. Document "Multifunctional graded dielectrics fabricated using dry powder printing", by A. J. Good et al. proposes printing a Luneburg lens using ceramic powder.

### 3. Summary of the Invention

The invention provides the fabrication method of the artificial dielectric lens and the artificial dielectric lens thereof, which solve the problems of poor parameter consistency, large scattering and much two-way communication interference of the existing antennas.

To solve the above problems, the present invention is realized as follows:
First, the embodiment of the invention provides a method for fabricating an artificial dielectric lens, which comprises the following steps: Print ceramic slurry on a base material to generate a printed pattern, heat it up to cure the printed pattern into a ceramic dry film, and form a composite plate together with the base material; Adjust the material and/or concentration of ceramic powder in the used ceramic slurry at different positions of the printed pattern correspondingly, so that the dielectric constant of the composite plate made after adjustment meets the plane distribution of the preset dielectric constant of the artificial dielectric lens; Center-align a number of composite plates made after adjustment to form a composite body, and the composite body comprises the artificial dielectric lens.

Preferably, the ceramic slurry contains at least one kind of ceramic powder, and the dielectric constant of the ceramic dry film is changed by adjusting the ratio of ceramic powder of different materials.

Preferably, the method further comprises: adjusting the thickness of the ceramic dry film, so that the dielectric constant of the composite plate made after adjustment meets the preset plane distribution of the dielectric constant of the artificial dielectric lens.

Preferably, the plane distribution of the preset dielectric constant of the artificial dielectric lens is 2.05-1, and the plane distribution of the preset dielectric constant is the projection of the spatial distribution of the preset dielectric constant on the horizontal or vertical plane, and the spatial distribution of the preset dielectric constant is a concentric sphere or concentric column.

Preferably, the printed pattern is circular or rectangular.

Preferably, the printed pattern is a concentric circle or a rectangle with the same center position, the center circle or rectangle adjusts the dielectric constant by selecting ceramic powder with high dielectric constant of different materials, and the outer circle or rectangle adjusts the dielectric constant by selecting ceramic slurry with different concentrations.

Preferably, the base material is a low-dielectric-constant base material, coated with glue and/or covered with an ultra-thin cellulose film. Preferably, the method further comprises: adding a certain proportion of resin and dispersant into the ceramic slurry, wherein the content of the resin is 5-20% and the concentration of the dispersant is 0.1-0.5%.

Preferably, the fabrication method of the ceramic dry film is as follows: the ceramic slurry is solidified at 70°C, and the temperature is continuously raised to the melting point of the base material to form a ceramic drying layer on the surface of the base material.

Secondly, the embodiment of the invention also provides an artificial dielectric lens, which is fabricated by the above method, and comprises the following components: an artificial dielectric lens is arranged in a composite body, and is formed by center-aligning a number of composite plates; The composite plate is composed of the ceramic dry film and base material, the ceramic slurry is printed on the base material to generate the printed patterns, and the printed patterns are cured into ceramic dry film by heating.

The advantageous effects of the invention include: For the artificial dielectric lens provided by the invention, the ceramic pulp printing technology allows the dielectric constant to be randomly distributed, and the dielectric constant can be accurately changed by adjusting the ceramic powder material type and pulp concentration, so that the artificial dielectric lens provided by the invention has stable and accurate dielectric constant distribution and good consistency of antenna parameters.

### 4. Brief Description of Accompany Drawings

The drawings illustrated here are used to provide a further understanding of the present invention and form a part of the present invention. The illustrative embodiments of the present invention and their descriptions are used to explain the present invention, and do not constitute undue limitations on the present invention. In the attached drawings:
Figure 1 is an embodiment of a fabrication method and procedure of the artificial dielectric lens;
Figure 2 is an embodiment of the distribution of the equivalent dielectric constant;
Figure 3(a) is a ceramic slurry of an embodiment of an artificial dielectric lens composite plate;
Figure 3 (b) is the composite plate of the embodiment of the composite plate of an artificial dielectric lens;
Figure 4 (a) is the cylindrical lens of the first embodiment of an artificial dielectric cylindrical lens;
Figure 4 (b) is the composite plate of the first embodiment of an artificial dielectric cylindrical lens;
Figure 5 (a) is the cylindrical lens of the second embodiment of an artificial dielectric cylindrical lens;
Figure 5(b) shows the composite plate of the second embodiment of the artificial dielectric cylindrical lens.

### 5. Specific Embodiment of the invention

In order to make the purpose, technical scheme and advantages of the present invention clearer, the technical scheme of the present invention will be clearly and completely described below with reference to specific embodiments of the present invention and corresponding drawings. Obviously, the described embodiments are only some but not all of the embodiments of the present invention. Based on the embodiments of the present invention, all other embodiments obtained by ordinary technicians in this field without creative labor are within the scope of protection of the present invention.

The innovation points of the invention are as follows: First, that composite plate in the artificial dielectric lens of printed ceramic body of the invention comprises the base material and ceramic dry film, the dielectric constant of the composite plate can be adjusted by adjusting the thickness of the ceramic dry film, the dielectric constant of the ceramic dry film can be adjusted by adjusting the concentration of ceramic slurry and/or ceramic powder materials, and the dielectric constant of the ceramic dry film can be changed by using various kinds of ceramic powder. Therefore, the ceramic slurry printing technology of the invention can realize arbitrary distribution of the dielectric constant, so that the dielectric constant is stable and accurate. Secondly, in the invention, the composite plates are overlapped in parallel to form a composite body, and the composite body contains the artificial dielectric lens which satisfies the spatial distribution of the dielectric constant and the preset distribution, so that the dielectric constant distribution of the artificial dielectric lens is stable and the antenna pattern is more regular.

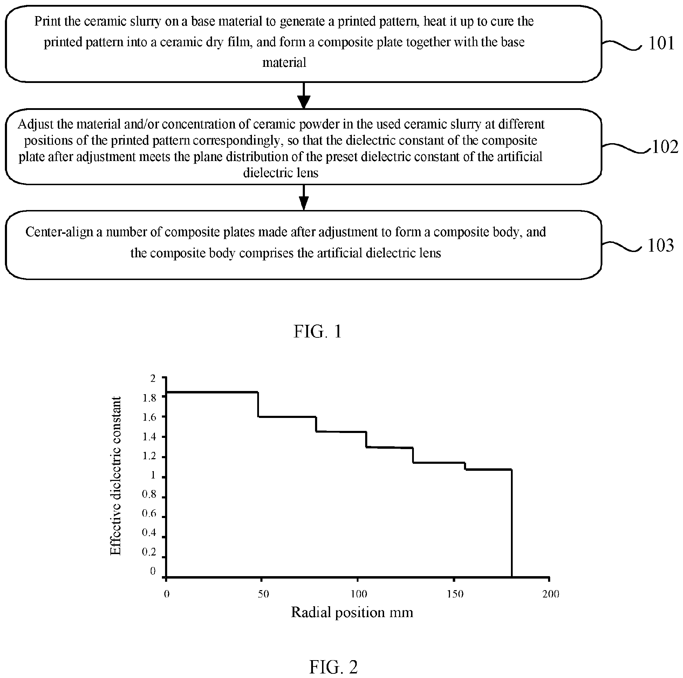

Figure 1 is an embodiment of the fabrication method and procedure of an artificial dielectric lens, which can be used to fabricate a dielectric cylindrical lens or a dielectric spherical lens with accurate and uniform dielectric constant distribution. As an embodiment of the invention, the fabrication method of an artificial dielectric lens includes the following steps:
Step 101, print the ceramic slurry on a base material to generate a printed pattern, heat it up to cure the printed pattern into a ceramic dry film, and form a composite plate together with the base material.

In Step 101, the base material is a low-dielectric-constant base material, which can be coated with glue and/or covered with an ultra-thin cellulose film.

In Step 101, the ceramic powder material is preferably high-dielectric-constant ceramic powder, and the dielectric constants of various kinds of commonly used ceramic powder are as follows: aluminosilicate 4-7, alumina 8-9, silicon carbide 9-10, titanium dioxide and titanate 15-10000. As the dielectric constant of titanate ceramic powder is high, titanate ceramic powder, such as barium titanate and calcium titanate, can be used for the invention.

It should be noted that the ceramic powder materials in the invention application can be one or more, and optimally, two kinds of ceramic powder with different material types may be used.

It should also be noted that the dielectric constants in the invention application are all relative dielectric constants. The equivalent dielectric constant is to replace the non-uniformly distributed dielectric constant with the uniformly distributed equivalent dielectric constant, and the equivalent dielectric constant in the invention application is a relative dielectric constant.

In Step 101, preferably, the ceramic slurry is prepared by adding the ceramic powder into the carbon nanotube. The example of making the ceramic slurry is as follows: Take the carbon nanotube and ceramic powder (such as silicon carbide powder), with the solid component ratio of the two ranging from 2: 98 to 5: 95. Prepare the carbon nanotube content into the carbon nanotube water solution with a concentration of 3%-10%. Ball-mill the carbon nanotube water solution to prepare the ball-milled carbon nanotube water solution. Add silicon carbide powder into the carbon nanotube water solution, and perform ball milling to prepare silicon carbide mixed slurry, which is the ceramic slurry in the embodiment of the invention. The ceramic slurry made by this formula is not easy to crack.

In Step 101, further, a resin and a dispersant may be added to the ceramic slurry, The resin and the dispersant are organic chemical solvents, and the resin and the dispersant account for a certain proportion in the water solution of the ceramic slurry. For example, the resin is ethylene glycol diglycidyl ether (EGDE), the dispersant is ammonium polyacrylate, the content of the resin is fixed at 5-20%, and the concentration of the dispersant is 0.1-0.5%. The addition of the resin and dispersant can increase the adhesion of the ceramic slurry, reduce the separation of the ceramic dry film from the printed plane and the cracks on the surface of the ceramic dry film, and improve the tensile strength of molded parts.

In Step 101, the ceramic is solidified into a ceramic dry film at a temperature above 50°C (preferably 70°C), so that the organic monomers in the ceramic slurry are crosslinked, and the ceramic slurry is continuously heated and kept warm until the ceramic dry film is obtained.

In Step 101, the printed pattern is cured into the ceramic dry film or ceramic blank by heating up, and forms a composite plate together with the base material.

In Step 101, there is one or more printed patterns. When the number of printed patterns is one, the printed pattern can be a circle or a rectangle. When such number is more than one, the printed patterns can be concentric circles or rectangles with the same center position.

After curing, in order to increase the adhesion of the ceramic slurry, preferably, the surface of the printed pattern is transiently heated to the melting point of the base material, and a ceramic drying layer is formed on the surface of the base material. For example, a hot press is used to transiently raise the temperature of the surface of the printed pattern to the melting point of the base material, and the high temperature holding time is <0.5 seconds. In this transient temperature rise process, other parts of the base material except the printed pattern surface do not heat up.

Step 102, adjust the material type and/or concentration of ceramic powder in the used ceramic slurry at different positions of the printed pattern correspondingly, so that the dielectric constant of the composite plate made after adjustment meets the plane distribution of the preset dielectric constant of the artificial dielectric lens.

In Step 102, in order to allow the equivalent dielectric constant of the finally fabricated artificial dielectric lens to meet the preset value, it is necessary to change the material type of the ceramic powder and/or the ceramic slurry concentration. The ceramic slurry concentration here refers to the mass concentration of the ceramic powder in the ceramic slurry.

In Step 102, the equivalent dielectric constant distribution of the artificial dielectric lens is the spatial distribution, which is the preset spatial distribution of the dielectric constant. When the artificial dielectric lens is a dielectric cylindrical lens, the equivalent dielectric constant distribution of the artificial dielectric lens is a concentric cylinder distribution. When the artificial dielectric lens is a dielectric spherical lens, the equivalent dielectric constant distribution of the artificial dielectric lens is a homocentric sphere distribution.

In Step 102, the preset plane distribution of the dielectric constant is the projection of the preset spatial distribution of the dielectric constant on the horizontal or vertical plane, and the preset plane distribution of the dielectric constant is obtained by projection according to the installation mode of the composite plate and according to the preset space distribution of the dielectric constant. For example, if the composite plate is vertically installed to obtain the composite body, the preset plane distribution of the dielectric constant is the horizontal projection of the preset spatial distribution of the dielectric constant. If the composite plate is horizontally installed to obtain the composite body, the preset plane distribution of the dielectric constant is the vertical projection of the preset spatial distribution of the the dielectric constant.

In Step 102, the thickness of the base material and the ceramic dry film can be preliminarily determined according to the preset plane distribution of the dielectric constant, so as to further estimate the dielectric constant of the ceramic dry film. According to the dielectric constant of the ceramic dry film, appropriate ceramic powder is selected and appropriate ceramic slurry concentration is designed.

In Step 102, in order to allow the dielectric constant of the composite plate to meet the preset planar distribution of the dielectric constant of the artificial dielectric lens, the material and/or concentration of the ceramic powder in the used ceramic slurry must be adjusted correspondingly at different positions of the printed pattern.

The principle of adjusting the ceramic slurry to change the equivalent dielectric constant of the composite plate is that under the condition that the mass of the printed ceramic slurry per unit area is the same, the dry matter mass is different when the concentration of the ceramic slurry is different, so the film thickness after curing is different, which causes the equivalent dielectric constant of the composite plate composed of the ceramic dry film and base material to be different.

The principle of adjusting the ceramic powder type to change the equivalent dielectric constant of the composite plate is that under the condition that the concentration and mass of the printed ceramic slurry per unit area is the same, the film thickness after curing is the same and the dielectric constant of the dry matter is different, then the equivalent dielectric constant of the composite plate composed of the ceramic dry film and base material is different.

In Sstep 102, the printed pattern is a concentric circle or a rectangle with the same center position. The center circle or rectangle can effectively reduce the thickness of the core layer by selecting ceramic powder with different materials and high dielectric constant, and the outer circle or rectangle can realize accurate control of the dielectric constant by selecting ceramic slurry with different concentrations.

In Step 102, the method further comprises: adjusting the thickness of the ceramic dry film, so that the dielectric constant of the composite plate made after adjustment meets the preset plane distribution of the dielectric constant of the artificial dielectric lens.

For example, the equivalent dielectric constant of the composite plate (base material+ceramic dry film) can be changed by local repeated printing to thicken the ceramic dry film.

In Step 102, in order to allow the ceramic slurry with the same concentration to have different dielectric constants, it is preferable to use at least two kinds of ceramic powder and obtain different dielectric constants by adjusting the ratio.

In Step 102, the method of changing the equivalent dielectric constant of the composite plate can also be at least one of the following: First, changing the ratio of different types of ceramic powder to make the ceramic slurry can change the dielectric constant of the ceramic dry film, thus changing the equivalent dielectric constant of the composite plate, for example, changing the ratio of two kinds of ceramic powder. Secondly, the equivalent dielectric constant of the composite plate (base material + ceramic dry film) can be changed by changing the density of the discrete points in the printed pattern. When that printed pattern is composed of discrete points, the equivalent dielectric constant of the composite plate can be further finely adjusted. When there are evenly distributed voids in the evenly distributed discrete points, the equivalent dielectric constant is smaller than the flat-coated printed pattern. When the density of discrete points decreases or the area of discrete points decreases, the equivalent dielectric constant decreases further due to the increase of voids.

Step 103, center-align a number of composite plates after adjustment to form a composite body, and the composite body comprises the artificial dielectric lens.

In Step 103, a number of composite plates of different adjusted printed patterns can be overlapped to form a composite body, or a number of composite plates of the same adjusted printed patterns can be overlapped to form a composite body.

In Step 103, different printed patterns means that the concentration of the ceramic slurry is different, or the thickness of the printed patterns is different, or the components of the ceramic slurry of the printed patterns are different, so that the equivalent dielectric constants of different positions of the dielectric composite plate form a desired distribution.

In Step 103, for the composite body made up of a number of composite plates, the equivalent dielectric constant is the concentric sphere distribution or concentric column distribution.

The embodiment of the invention provides a method for fabricating an artificial dielectric cylindrical len or a dielectric spherical lens, wherein the dielectric constant distribution is 2.05-1, and the dielectric cylindrical lens fabricated according to the method is 20-70cm in height and 20-90cm in diameter, and the dielectric spherical lens fabricated according to the method of the invention is 20-90 cm in diameter.

For example, in the fabrication of the artificial dielectric spherical lens, the spherical dielectric constant distribution is discretized into M values, and the equivalent dielectric constant en (n=1~M) in the radial direction gradually decreases from e1 to eM, specifically ranging from 2.05 to 1.00, with the maximum value preferably being 2 and the minimum value preferably being 1 (relative dielectric constant of air).

The above distribution is discretized along the horizontal or vertical direction to form a series of centrosymmetric concentric circle pattern combinations. According to the above distribution, the printed pattern is a series of concentric circles, so that the equivalent dielectric constant of the composite plate at the printed pattern meet the above distribution, and the composite plate is formed. N layers of composite plates are combined, the printed patterns of each composite plate are center-aligned to form a composite body, and the composite body contains an artificial dielectric spherical lens.

The embodiment of the invention can realize an artificial dielectric lens with accurate and stable dielectric constant distribution, has a stable antenna pattern, and has a simple fabrication process for convenient processing and production, with strong practicability.

Figure 2 shows the equivalent dielectric constant distribution of an embodiment of the composite plate of an artificial dielectric lens, which is the composite plate dielectric constant of a lens body with six-step equivalent dielectric constant distribution, and can be used as the preset plane distribution of the dielectric constant of a dielectric cylindrical lens or a dielectric spherical projection.

Figure 2 can be used to show the relationship between the position of the printed pattern and the preset plane distribution of the dielectric constant of the composite plate. The abscissa is the radial position, and is the distance from the point on the printed pattern to the center of the printed pattern. When the printed pattern is concentric, the abscissa is the distance from the point on the printed pattern to the center of the circle along the radial direction, and the ordinate is the value of the equivalent dielectric constant. In the embodiment of the invention, the equivalent dielectric constant of the composite plate is distributed between 2. ~ 1., for example, the maximum value is 1.85 and the minimum value is 1.08.

In the embodiment of the invention, for each composite plate and along the radial direction, the equivalent dielectric constant is 1.85 when the radial range is 0 ~ 47.7mm, the equivalent dielectric constant is 1.6 when the radial range is 47.7 ~ 78.2mm, the equivalent dielectric constant is 1.45 when the radial range is 78.2 ~ 104.2mm, the equivalent dielectric constant is 1.3 when the radial range is 104.2 ~ 128.4mm, the equivalent dielectric constant is 1.15 when the radial range is 128.4 ~ 156.6mm, the equivalent dielectric constant is 1.08 when the radial range is 156.6 ~ 180.1mm.

In the embodiment of the invention, the measurement of the equivalent dielectric constant includes: The designed dielectric constant of each layer in the artificial dielectric lens is taken as the target equivalent dielectric constant of the composite plate, and the target dielectric constant of the ceramic dry film (dry matter) is estimated according to the thickness of the ceramic dry film and the thickness of the base material. The dielectric constant tester is used to test the dielectric constant of each preliminarily made composite plate, and the ceramic slurry concentration and ceramic powder material type are adjusted to make the composite plate meet the target dielectric constant of the composite plate, so as to determine the ceramic slurry concentration and ceramic powder material type that meet the requirements. According to the selected ceramic slurry concentration and ceramic powder type, a printed pattern is formed on the surface of the base material, and the equivalent dielectric constant of the composite plate is tested according to Step 101.

In the embodiment of the invention, for example, the printed pattern is a concentric circle, and the distribution of the equivalent dielectric constant of the composite plate conforms to Figure 2. The thickness of the used base material is 2mm, and the dielectric constant of dry matter (ceramic powder) is 9.85. When the slurry concentration is 80%, the ceramic dry film thickness is 0.2mm. Under the condition of the same ceramic slurry mass per unit area, the ceramic slurry concentration and ceramic dry film thickness obtained according to the radial position and equivalent dielectric constant in Figure 2 are shown in Table 1 below.

**Table 1 Examples of parameters of composite plate of a concentric-circle printed pattern**

| Radial position mm | Equivalent dielectric constant of composite plate | Ceramic slurry concentration % | Thickness of ceramic dry film mm |
|---|---|---|---|
| 0~47.7 | 1.85 | 80.00 | 0.2000 |
| 47.7~78.2 | 1.6 | 57.66 | 0.1442 |
| 78.2~104.2 | 1.45 | 44.26 | 0.1107 |
| 104.2~128.4 | 1.3 | 30.86 | 0.0772 |
| 128.4~155.6 | 1.15 | 17.46 | 0.0437 |
| 155.6~180.1 | 1.08 | 11.21 | 0.0280 |

In the embodiment of the invention, for another example, the printed pattern is a concentric circle, and the distribution of the equivalent dielectric constant of the composite plate conforms to Figure 2. The thickness of the used base material is 4mm, the dielectric constant of dry matter (ceramic powder) and the concentration of ceramic slurry are adjusted. When the slurry concentration is 80%, the ceramic dry film thickness is 0.2mm. Under the condition of the same ceramic slurry mass per unit area, the ceramic slurry concentration and ceramic dry film thickness obtained according to the radial position and equivalent dielectric constant in Figure 2 are shown in Table 2 below.

**Table 2 Example of parameters of another composite plate**

| Radial position mm | Equivalent dielectric constant of composite plate | Dielectric constant of dry matter | Ceramic slurry concentration % | Thickness of ceramic dry film mm |
|---|---|---|---|---|
| 0~47.7 | 1.85 | 17.850 | 80.00 | 0.2000 |
| 47.7~78.2 | 1.6 | 12.600 | 80.00 | 0.2000 |
| 78.2~104.2 | 1.45 | 9.450 | 80.00 | 0.2000 |
| 104.2~128.4 | 1.3 | 9.450 | 50.00 | 0.1250 |
| 128.4~155.6 | 1.15 | 9.450 | 32.00 | 0.0800 |
| 155.6~180.1 | 1.08 | 9.450 | 24.00 | 0.0600 |

The embodiment of the invention provides the equivalent dielectric constant distribution of the composite plate and two composition modes of the composite plate. Through the adjustment of the material of ceramic powder and/or the concentration of the ceramic slurry, the composite plate meeting the preset dielectric constant distribution can be fabricated, and the composite plate of the embodiment of the invention can be used for fabricating the artificial dielectric cylindrical lenses or artificial dielectric spherical lenses.

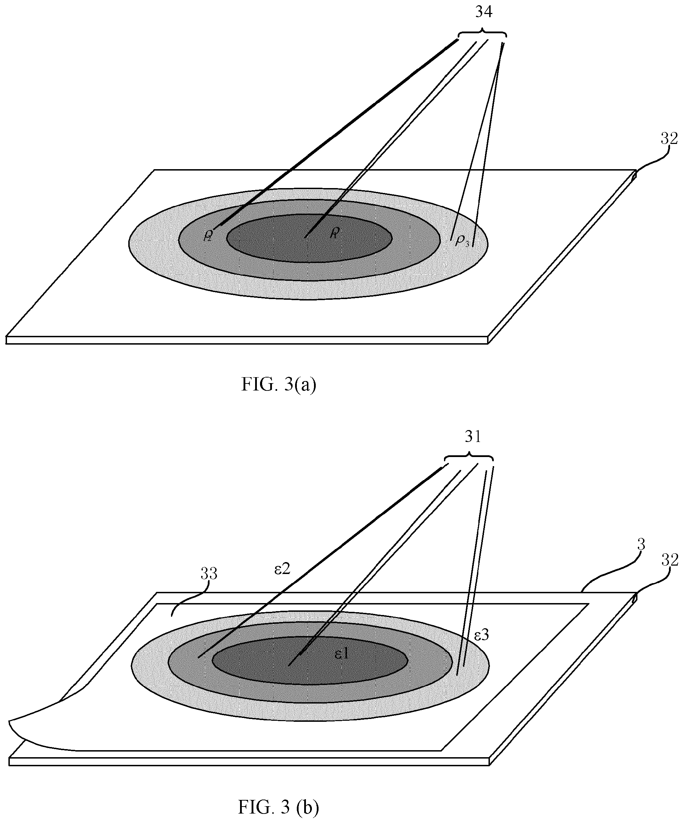

Figure 3(a) is a ceramic slurry of the composite plate of the embodiment of an artificial dielectric lens. Figure 3 (b) is the composite plate of the embodiment of an artificial dielectric lens, which can be used for fabricating the composite plate of a dielectric cylindrical lens or a dielectric spherical lens.

Figure 3(a) includes ceramic slurry 34 and base material 32, and the ceramic slurry is used to make the ceramic dry film.

The composite plate is composed of the ceramic dry film and base material, the ceramic slurry is printed on the base material to generate the printed pattern, and the printed pattern is cured into the ceramic dry film by heating.

In the embodiment of the invention, the base material is a low-dielectric-constant base material, such as sponge foamed paper or flexible foamed plastics, which forms a multilayer composite material with the ceramic dry film to adjust the equivalent dielectric constant. Materials of sponge foamed paper are polystyrene, polyvinyl chloride and polyethylene, etc. Optimally, EPE materials are used.

The thickness of sponge foamed paper is 0.5 ~ 5 mm.

In the embodiment of the invention, the printed patterns are three concentric circles. From the center to the surface, the ceramic paste concentration is r1, r2 and r3, respectively, with r1 > r2 > r3, and the dielectric constant of the ceramic dry film fabricated in this way decreases from the center to the surface.

Figure 3 (b) shows a composite plate. The composite plate 3 includes a ceramic dry film 31, a base material 32, and a cellulose film 33, which can be used to make the artificial dielectric lens.

The composite plate is composed of the ceramic dry film and base material, the ceramic slurry is printed on the base material to generate the printed pattern, and the printed pattern is cured into the ceramic dry film by heating.

In the embodiment of the invention, the base material is a low-dielectric-constant base material, such as sponge foamed paper or flexible foamed plastics, which forms a multilayer composite material with the ceramic dry film to adjust the equivalent dielectric constant. Materials of sponge foamed paper are polystyrene, polyvinyl chloride and polyethylene, etc. Optimally, EPE materials are used. The thickness of sponge foamed paper is 0.5 ~ 5 mm. Preferably, the base material is coated with glue and/or covered with an ultra-thin cellulose film to improve the printing quality.

In the embodiment of the invention, the dielectric constants of the cellulose film and the base material are the same, the dielectric constant of the ceramic dry film from the center to the surface is e1, e2, e3, respectively, with e1 > e2 > e3, and the equivalent dielectric constant of the composite plate made in this way decreases from the center to the surface.

The embodiment of the invention provides ceramic dry films with different dielectric constants, and changing the ceramic slurry concentration can change the dielectric constant of a ceramic dry film, thereby changing the equivalent dielectric constant of the composite plate, further changing the dielectric constant of the composite body, and changing the slurry concentration to change the equivalent dielectric constant of the composite plate.

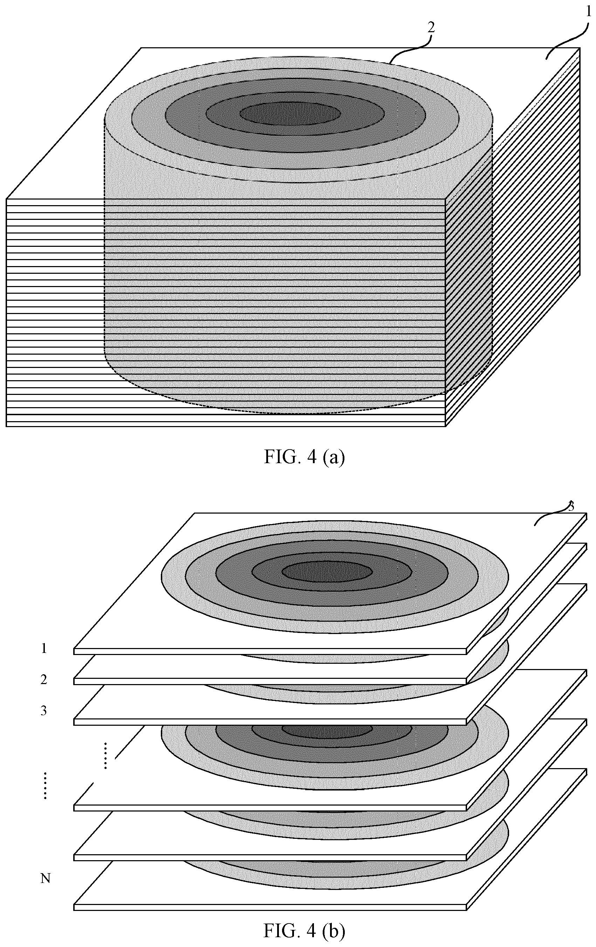

Figure 4 (a) is a cylindrical lens of the first embodiment of the artificial dielectric cylindrical lens, and Figure 4(b) is the composite plate of the first embodiment of the artificial dielectric cylindrical lens. As the embodiment of the invention, Figure 4(b) provides an artificial dielectric cylindrical lens. Specifically, an artificial dielectric lens 2 is arranged in the composite body 1, and is composed of a number of center-aligned composite plates 3.

The composite plate is composed of the ceramic dry film and base material, the ceramic slurry is printed on the base material to generate the printed pattern, and the printed pattern is cured into the ceramic dry film by heating.

In the embodiment of the invention, the equivalent dielectric constant of the artificial dielectric lens is distributed in concentric columns, and the composite body is composed of horizontal composite plates.

In the embodiment of the invention, the distribution of the dielectric constant of the cylinder is discretized into M values, and the equivalent dielectric constant en (n=1~M) in the radial direction gradually decreases from e1 to eM, specifically ranging from 2.00 to 1.00, with the maximum value preferably being 2 and the minimum value preferably being 1 (relative dielectric constant of air), and the dielectric constant being unchanged along the height direction of the cylinder.

It should be noted that the equivalent dielectric constant along the radial direction is the preset plane distribution of the dielectric constant of the artificial dielectric lens.

According to the preset plane distribution of the dielectric constant, the printed pattern is a series of concentric circles, so that the equivalent dielectric constant of the composite plate at the printed pattern meets the requirement that the distribution decrease from e1 to eM, and a horizontal composite plate is formed. As shown in Figure 4(a), N layers of horizontal composite plates are combined in the vertical direction, the printed patterns of each composite plate are aligned to form a composite body, and the composite body contains an artificial dielectric cylindrical lens.

According to the artificial dielectric cylindrical lens provided by the embodiment of the invention, the dielectric constant in the vertical direction is unchanged, and the dielectric constant in the horizontal direction decreases from the center to the surface. The composite plate is vertically installed to obtain the composite body, so that the preset plane distribution of the dielectric constant is the horizontal projection of the preset spatial distribution of the dielectric constant.

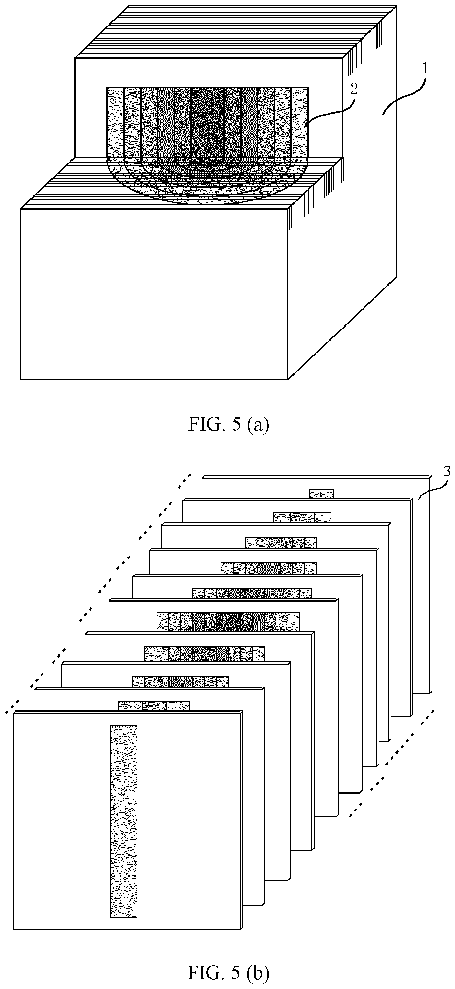

Figure 5 (a) is a cylindrical lens of the second embodiment of the artificial dielectric cylindrical lens, and Figure 5(b) is the composite plate of the second embodiment of the artificial dielectric cylindrical lens. As the embodiment of the invention, Figure 5(b) provides an artificial dielectric cylindrical lens. Specifically, an artificial dielectric lens 2 is arranged in the composite body 1, and is composed of a number of center-aligned composite plates 3.

The composite plate is composed of the ceramic dry film and base material, the ceramic slurry is printed on the base material to generate the printed pattern, and the printed pattern is cured into the ceramic dry film by heating.

In the embodiment of the invention, the equivalent dielectric constant of the artificial dielectric lens is distributed in concentric columns, and the composite body is composed of vertical composite plates.

In the embodiment of the invention, the distribution of the dielectric constant of the cylinder is discretized into M values, and the equivalent dielectric constant en (n=1~M) in the radial direction gradually decreases from e1 to eM, specifically ranging from 2.00 to 1.00, with the maximum value preferably being 2 and the minimum value preferably being 1 (relative dielectric constant of air), and the dielectric constant being unchanged along the height direction of the cylinder.

Discretization is conducted in the vertical direction according to the preset plane distribution of the dielectric constant to form a series of centrally symmetric, columnar combinations of equivalent-dielectric-constant patterns. A series of centrally symmetric, columnar patterns with equal dielectric constants are printed on the base material to form a vertical composite plate. As shown in Figure 5(a), N layers of vertical composite plates are combined in the horizontal direction, the printed patterns of each composite plate are center-aligned to form a composite body, and the composite body contains an artificial dielectric cylindrical lens.

According to the artificial dielectric cylindrical lens provided by the embodiment of the invention, the dielectric constant in the vertical direction is unchanged, and the dielectric constant in the horizontal direction decreases from the center to the surface. The composite plate is vertically installed to obtain the composite body, so that the preset plane distribution of the dielectric constant is the vertical projection of the preset spatial distribution of the dielectric constant.

It should be noted that the term "including", "containing" or any other variation thereof is intended to cover non-exclusive meanings, so that the process, method, commodity or equipment that includes a series of elements not only includes those elements, but also includes other elements not explicitly listed, or also includes elements inherent to such process, method, commodity or equipment. Without further restrictions, the elements defined by the statement "including one···" do not exclude the existence of other identical elements in the process, method, commodity or equipment that includes such elements.

The above are only the preferred embodiments of the invention. It should be pointed out that those ordinary technicians in the technical field can make some improvement and modification without departing from the principle of the invention, and such improvement and modification should also be regarded as the protection scope of the invention.

## Claims

1. A fabrication method of the artificial dielectric lens, **characterized in that** it comprises the following steps:
print ceramic slurry on a base material to generate a printed pattern, heat it up to cure the printed pattern into a ceramic dry film, and form a composite plate together with the base material (101), wherein the ceramic slurry is prepared by adding ceramic powder into a carbon nanotube water solution; and wherein the base material is a low-dielectric-constant base material;
adjust the material and/or concentration of ceramic powder in the used ceramic slurry at different positions of the printed pattern correspondingly, so that the dielectric constant of the composite plate made after adjustment meets the plane distribution of the preset dielectric constant of the artificial dielectric lens (102); wherein the plane distribution of the preset dielectric constant is the projection of the spatial distribution of the preset dielectric constant on the horizontal or vertical plane, and the spatial distribution of the preset dielectric constant is a concentric sphere or concentric column;
center-align a number of composite plates after adjustment to form a composite body, and the composite body comprises the artificial dielectric lens (103).

2. The fabrication method of the artificial dielectric lens according to claim 1, **characterized in that** the ceramic slurry contains at least one kind of ceramic powder, and the dielectric constant of the ceramic dry film is changed by adjusting the ratio of ceramic powder of different materials.

3. The fabrication method of artificial dielectric lens according to claim 1, **characterized in that** the method further comprises:
adjust the thickness of the ceramic dry film, so that the dielectric constant of the composite plate made after adjustment meets the preset plane distribution of the dielectric constant of the artificial dielectric lens.

4. The fabrication method of artificial dielectric lens according to claim 1, **characterized in that** the plane distribution of the preset dielectric constant of the artificial dielectric lens is 2.05-1.

5. The fabrication method of the artificial dielectric lens according to claim 1, **characterized in that** the printed pattern is circular or rectangular.

6. The fabrication method of the artificial dielectric lens according to claim 1, **characterized in that** the printed pattern is a concentric circle or a rectangle with the same center position, the center circle or rectangle adjusts the dielectric constant by selecting ceramic powder with high dielectric constant of different materials, and the outer circle or rectangle adjusts the dielectric constant by selecting ceramic slurry with different concentrations.

7. The fabrication method of the artificial dielectric lens according to claim 1, **characterized in that** the base material is coated with glue and/or covered with ultra-thin cellulose film.

8. The fabrication method of the artificial dielectric lens according to claim 1, **characterized in that** the method further comprises: add a certain proportion of resin and dispersant into the ceramic slurry, wherein the content of the resin is 5-20% and the concentration of the dispersant is 0.1-0.5%.

9. The fabrication method of the artificial dielectric lens according to claim 1, **characterized in that** the fabrication method of the ceramic dry film is as follows: the ceramic slurry is solidified at 70°C, and the temperature is continuously raised to the melting point of the base material to form a ceramic drying layer on the surface of the base material.

10. An artificial dielectric lens, which is made using the method as described in claims 1-9, comprising an artificial dielectric lens (2) in the composite body (1), which is composed of a number of center-aligned composite plates (3); the composite plate is composed of the ceramic dry film and base material, the ceramic slurry is printed on the base material to generate the printed pattern, and the printed pattern is cured into the ceramic dry film by heating.

## Patentansprüche

1. - Herstellungsverfahren einer künstlichen dielektrischen Linse, **dadurch gekennzeichnet, dass** es die folgenden Schritte umfasst:
Drucken von Keramikaufschlämmung auf ein Basismaterial, um ein gedrucktes Muster zu erzeugen, Erhitzen von diesem, um das gedruckte Muster zu einem keramischen Trockenfilm auszuhärten und eine Verbundplatte zusammen mit dem Basismaterial (101) zu bilden, wobei die Keramikaufschlämmung durch Hinzufügen von Keramikpulver zu einer Kohlenstoffnanoröhrchen-Wasserlösung hergestellt wird; und wobei das Basismaterial ein Basismaterial mit niedriger Dielektrizitätskonstante ist;
entsprechendes Anpassen des Materials und/oder der Konzentration des Keramikpulvers in der verwendeten Keramikaufschlämmung an verschiedenen Positionen des gedruckten Musters, sodass die Dielektrizitätskonstante der nach Anpassen hergestellten Verbundplatte die Ebenenverteilung der voreingestellten Dielektrizitätskonstante der künstlichen dielektrischen Linse (102) erfüllt; wobei die Ebenenverteilung der voreingestellten Dielektrizitätskonstante die Projektion der räumlichen Verteilung der voreingestellten Dielektrizitätskonstante auf die horizontale oder vertikale Ebene ist, und die räumliche Verteilung der voreingestellten Dielektrizitätskonstante eine konzentrische Kugel oder konzentrische Säule ist;
mittiges Ausrichten einer Anzahl von Verbundplatten nach Anpassen, um einen Verbundkörper zu bilden, und wobei der Verbundkörper die künstliche dielektrische Linse (103) umfasst.

2. - Herstellungsverfahren einer künstlichen dielektrischen Linse nach Anspruch 1, **dadurch gekennzeichnet, dass** die Keramikaufschlämmung mindestens eine Art von Keramikpulver enthält und die Dielektrizitätskonstante des keramischen Trockenfilms durch Anpassen des Verhältnisses von Keramikpulver aus verschiedenen Materialien verändert wird.

3. - Herstellungsverfahren einer künstlichen dielektrischen Linse nach Anspruch 1, **dadurch gekennzeichnet, dass** das Verfahren ferner Folgendes umfasst:
Anpassen der Stärke des keramischen Trockenfilms, sodass die Dielektrizitätskonstante der nach Anpassen hergestellten Verbundplatte die voreingestellte Ebenenverteilung der Dielektrizitätskonstante der künstlichen dielektrischen Linse erfüllt.

4. - Herstellungsverfahren einer künstlichen dielektrischen Linse nach Anspruch 1, **dadurch gekennzeichnet, dass** die Ebenenverteilung der voreingestellten dielektrischen Konstante der künstlichen dielektrischen Linse 2,05-1 ist.

5. - Herstellungsverfahren einer künstlichen dielektrischen Linse nach Anspruch 1, **dadurch gekennzeichnet, dass** das Druckmuster kreisförmig oder rechteckig ist.

6. - Herstellungsverfahren einer künstlichen dielektrischen Linse nach Anspruch 1, **dadurch gekennzeichnet, dass** das gedruckte Muster ein konzentrischer Kreis oder ein Rechteck mit der gleichen Mittelposition ist, der mittlere Kreis oder das Rechteck die Dielektrizitätskonstante durch Auswählen von Keramikpulver mit hoher Dielektrizitätskonstante aus verschiedenen Materialien anpasst und der äußere Kreis oder das äußere Rechteck die Dielektrizitätskonstante durch Auswählen von Keramikaufschlämmung mit verschiedenen Konzentrationen anpasst.

7. - Herstellungsverfahren einer künstlichen dielektrischen Linse nach Anspruch 1, **dadurch gekennzeichnet, dass** das Basismaterial mit Klebstoff beschichtet und/oder mit einer ultradünnen Zellulosefolie bedeckt ist.

8. - Herstellungsverfahren einer künstlichen dielektrischen Linse nach Anspruch 1, **dadurch gekennzeichnet, dass** das Verfahren ferner Folgendes umfasst: Hinzufügen eines bestimmten Anteils an Harz und Dispergiermittel zu der Keramikaufschlämmung, wobei der Anteil des Harzes 5-20% und die Konzentration des Dispergiermittels 0,1-0,5% ist.

9. - Herstellungsverfahren einer künstlichen dielektrischen Linse nach Anspruch 1, **dadurch gekennzeichnet, dass** das Herstellungsverfahren des keramischen Trockenfilms wie folgt ist: die Keramikaufschlämmung wird bei 70 °C verfestigt, und die Temperatur wird kontinuierlich bis zum Schmelzpunkt des Basismaterials erhöht, um eine keramische Trockenschicht auf der Oberfläche des Basismaterials zu bilden.

10. - Künstliche dielektrische Linse, die unter Verwendung des in den Ansprüchen 1 bis 9 beschriebenen Verfahrens hergestellt wird, umfassend eine künstliche dielektrische Linse (2) in dem Verbundkörper (1), der aus einer Anzahl von mittig ausgerichteten Verbundplatten (3) besteht;
die Verbundplatte besteht aus dem keramischen Trockenfilm und dem Basismaterial, die Keramikaufschlämmung wird auf das Basismaterial gedruckt, um das gedruckte Muster zu erzeugen, und das gedruckte Muster wird durch Erhitzen zu dem keramischen Trockenfilm ausgehärtet.

## Revendications

1. - Procédé de fabrication de lentille diélectrique artificielle, **caractérisé par le fait qu'**il comprend les étapes suivantes :
imprimer une suspension de céramique sur un matériau de base pour générer un motif imprimé, chauffer celle-ci pour faire durcir le motif imprimé en un film sec de céramique, et former une plaque composite avec le matériau de base (101), la suspension de céramique étant préparée par ajout de poudre céramique à une solution aqueuse de nanotubes de carbone ; et le matériau de base étant un matériau de base à faible constante diélectrique ;
ajuster le matériau et/ou la concentration de poudre céramique dans la suspension de céramique utilisée à différentes positions du motif imprimé de manière correspondante, de telle sorte que la constante diélectrique de la plaque composite obtenue après ajustement correspond à la distribution plane de la constante diélectrique prédéfinie de la lentille diélectrique artificielle (102) ; la distribution plane de la constante diélectrique prédéfinie étant la projection de la distribution spatiale de la constante diélectrique prédéfinie sur le plan horizontal ou vertical, et la distribution spatiale de la constante diélectrique prédéfinie étant une sphère concentrique ou une colonne concentrique ;
aligner de manière centrée un nombre de plaques composites après ajustement pour former un corps composite, et le corps composite comprenant la lentille diélectrique artificielle (103).

2. - Procédé de fabrication de lentille diélectrique artificielle selon la revendication 1, **caractérisé par le fait que** la suspension de céramique contient au moins un type de poudre céramique, et la constante diélectrique du film sec de céramique est modifiée par ajustement du rapport de poudre céramique de différents matériaux.

3. - Procédé de fabrication de lentille diélectrique artificielle selon la revendication 1, **caractérisé par le fait que** le procédé comprend en outre :
ajuster l'épaisseur du film sec céramique, de telle sorte que la constante diélectrique de la plaque composite obtenue après ajustement correspond à la distribution plane prédéfinie de la constante diélectrique de la lentille diélectrique artificielle.

4. - Procédé de fabrication de lentille diélectrique artificielle selon la revendication 1, **caractérisé par le fait que** la distribution plane de la constante diélectrique prédéfinie de la lentille diélectrique artificielle est de 2,05 - 1.

5. - Procédé de fabrication de lentille diélectrique artificielle selon la revendication 1, **caractérisé par le fait que** le motif imprimé est circulaire ou rectangulaire.

6. - Procédé de fabrication de lentille diélectrique artificielle selon la revendication 1, **caractérisé par le fait que** le motif imprimé est un cercle concentrique ou un rectangle avec la même position centrale, le cercle ou rectangle central ajuste la constante diélectrique par sélection de la poudre céramique à constante diélectrique élevée de différents matériaux, et le cercle ou rectangle extérieur ajuste la constante diélectrique par sélection d'une suspension de céramique avec différentes concentrations.

7. - Procédé de fabrication de lentille diélectrique artificielle selon la revendication 1, **caractérisé par le fait que** le matériau de base est enduit de colle et/ou recouvert d'un film de cellulose ultra-mince.

8. - Procédé de fabrication de lentille diélectrique artificielle selon la revendication 1, **caractérisé par le fait que** le procédé comprend en outre : ajouter une certaine proportion de résine et de dispersant dans la suspension de céramique, la teneur en résine étant de 5 - 20 % et la concentration du dispersant étant de 0,1 - 0,5 %.

9. - Procédé de fabrication de lentille diélectrique artificielle selon la revendication 1, **caractérisé par le fait que** le procédé de fabrication du film sec de céramique est comme suit : la suspension de céramique est amenée à se solidifier à 70°C, et la température est élevée de manière continue jusqu'au point de fusion du matériau de base pour former une couche de séchage en céramique sur la surface du matériau de base.

10. - Lentille diélectrique artificielle qui est fabriquée selon le procédé décrit dans l'une des revendications 1 à 9, comprenant une lentille diélectrique artificielle (2) dans le corps composite (1), qui est composée d'un nombre de plaques composites (3) alignées de manière centrée ;
la plaque composite est composée d'un film sec de céramique et d'un matériau de base, la suspension de céramique est imprimée sur le matériau de base pour générer le motif imprimé, et le motif imprimé est durci en le film sec céramique par chauffage.
